# EUROPEAN PATENT APPLICATION

(11) **EP 4 389 801 A1**
(43) Date of publication of application: **26.06.2024**
(21) Application number: 22214965.0
(22) Date of filing: 20.12.2022
(51) Int. Cl.: C08J 3/12, C11D 3/00, C11D 3/37

(54) **PROCESS FOR MAKING A GRANULE**

(71) Applicant: BASF SE, 67056 Ludwigshafen am Rhein (DE)
(72) Inventor: TUERK, Holger, 67056 Ludwigshafen am Rhein (DE); GARCIA CASTRO, Ivette, 67056 Ludwigshafen am Rhein (DE); SCHOENHERR, Michael, 67056 Ludwigshafen am Rhein (DE); SUELING, Carsten, 67056 Ludwigshafen am Rhein (DE); HUEFFER, Stephan, 67063 Ludwigshafen (DE); BOECKH, Dieter, 67061 Ludwigshafen (DE); WOHLMUTH, Catharina, 67056 Ludwigshafen am Rhein (DE); VANDEMEULEN, Guido, 67056 Ludwigshafen am Rhein (DE)
(74) Representative: BASF IP Association

(57) **Abstract**

Process for making a granule of an aliphatic polymer (A) comprising polyalkylene oxide chains, ester groups and, optionally, amino groups or amide groups, said process comprising the steps of
(a) providing polymer (A) in the molten state together with at least one of water and polyalkylene glycol,
(b) introducing said polymer (A) into a drying apparatus that contains a particulate organic or inorganic material with a pH value in the range of from 6 to 11, determined in 1% by weight aqueous slurry or solution, and
(c) removing water, if applicable, by evaporation,
(d) collecting a granule comprising solid polymer (A) and particulate organic or inorganic material.

## Description

The present invention is directed towards a process for making a granule of an aliphatic polymer (A) comprising polyalkylene oxide chains, ester groups and tertiary amino groups, said process comprising the steps of
(a) providing polymer (A) in the molten state together with at least one of water and polyalkylene glycol,
(b) introducing said polymer (A) into a drying apparatus that contains a particulate organic or inorganic material with a pH value in the range of from 6 to 11, determined in 1% by weight aqueous slurry or solution, and
(c) removing water, if applicable, by evaporation,
(d) collecting a granule comprising solid polymer (A) and particulate organic or inorganic material.

Cleaning detergent compositions, e.g., laundry detergents and hard surface cleaners, need to fulfill various requirements. Especially in laundry detergent compositions, a lot of effects need to be achieved, for example avoidance of redeposition of soil and anti-greying. Several polymers have been proposed to avoid redeposition and greying of clothes.

In modern laundry detergents, biodegradability of the majority of the organic ingredients is requested. However, especially in liquid laundry detergents, it has been found that several of the biodegradable components start to decompose already on their way to the market, and the efficiency decreases.

It was therefore an objective to provide a method to improve the shelf life of detergent compositions that contain biodegradable polymers. It was further an objective to provide a process for making detergent compositions that show an improved shelf life, and it was an objective to provide applications for detergent compositions.

Accordingly, the process as defined at the outset has been found, hereinafter also referred to as inventive process. The inventive process comprises at least three steps, step (a), step (b), and step (d), hereinafter also briefly referred to as (a), (b), and (d), respectively. The inventive process may further comprise the optional step (c). Steps (a) to (d) will be described in more details below.

The inventive process is about making a granule from an aliphatic polymer (A). In the course of the resent invention, the term granule refers to a particulate solid with an average particle diameter (d50) in the range of from 150 µm to 1.5 mm, preferably 250 µm to 1 mm. The particle diameter refers to the volume based average particle diameter and may be determined, e.g., by sieving methods.

The particle size distribution of said granule may be broad or narrow. The distribution may be determined, e.g., by sieving methods. The particle diameter distribution may be in the range of from 1.3 to 5, preferably 1.5 to 3.

Polymer (A) is also referred to as aliphatic polymer (A). In the context of the present invention, this will mean that polymer (A) does not contain aromatic or olefinic groups, detectable, e.g., by ¹H NMR spectroscopy.

Polymer (A) comprises polyalkylene oxide chains, preferably polyethylene oxide chains, in addition to ester groups and, optionally, amino groups or amide groups. Said ester groups are selected from carboxylic ester groups and carbonate groups.

In one embodiment of the present invention, polymer (A) comprises 5 to 30 polyalkylene oxide chains, especially polyethylene oxide chains per molecule, preferred are 10 to 29.

In one embodiment of the present invention, polymer (A) additionally comprises amino groups, for example one to 20 per molecule, preferably 2 to 16, more preferably 4 to 14 or 6 to 18. Said amino groups are preferably tertiary amino groups.

The numbers of ester groups, amino groups and polyalkylene oxide chains indicated above refers to average values, especially the number average value.

In one embodiment of the present invention, polymer (A) has a melting point in the range of from 30 to 60°C, determined by differential scanning calorimetry ("DSC").

In one embodiment of the present invention, polymer (A) has a glass transition temperature T_{G} in the range of from -60°C-to +40°C, determined by DSC.

In one embodiment of the present invention, polymer (A) has an OECD 301F biodegradability of at least 40%, for example 40 to 85%, or at least 40 to 65%. In the context of the present invention, the terms OECD 301F biodegradability and biodegradation according to OECD guidelines are used interchangeably.

According to the OECD guidelines a test is valid if:
1. The reference reaches 60% within 14 days.
2. The difference of the extremes of the test replicates by the end of the test is less than 20%.
3. Oxygen uptake of inoculum blank is 20 to 30 mg O₂/I and must not be greater than 60 mg O₂/I.
4. The pH value measured at the end of the test must be between 6 and 8.5.

In one embodiment of the present invention, the numerical ratio of polyalkylene oxide chains and ester groups in polymer (A) is in the range of from 5:1 to 1:1, preferably from 4:1 to 3:1, and the number of amino groups and amido groups is zero.

In another embodiment of the present invention, the numerical ratio of polyalkylene oxide chains and ester groups and amido groups in polymer (A) is in the range of from 5:1 to 1:1, preferably from 4:1 to 3:1, and the number of amino groups is larger than zero.

In one embodiment of the present invention, in polymer (A) the molar ratio of alkoxide groups and ester groups is in the range of from 10:1 to 0.1:1

In one embodiment of the present invention, polymer (A) has an average molecular weight Mₙ in the range of from 1,000 to 20,000 g/mol.

In one embodiment of the present invention, polymer (A) has an average molecular weight M_{w} in the range of from 2,000 to 50,000 g/mol.

The average molecular weight Mₙ as well as M_{w} may be determined by gel permeation chromatography ("GPC"). Suitable mobile phases 0.1 M aqueous NaCl solution containing 0.05 % by weight trifluoroacetic acid potassium salt as mobile phase, or in hexafluoroisopropanol ("HFIP") containing 0.05 % by weight trifluoroacetic acid potassium salt as mobile phase, each time preferably with TSKgel as stationary phase.

In step (a), polymer (A) is provided in the molten state, for example as a melt. Said melt may be viscous, for example 10,000 to 50,000 mPa·s at 23°C, determined with a parallel-plate rheometer, preferably in the range of from 10,000 to 30,000 mPa·s. The term melt in the context encompasses both true melts and supercooled melts.

In one embodiment of the present invention polymer (A) is provided as melt, and said melt has a pH value in the range of from 6 to 11, determined at 23°C and a dilution with water of 1:100.

Said polymer (A) is provided together with at least one of water and polyalkylene glycol, for example polypropylene glycol or especially polyethylene glycol. In one embodiment of the present invention the amount of water is in the range of from 0.1 to 15 % by weight, preferably 0.1 to 10.0 % by weight, more preferred 0.2 to 5.0% by weight. In one embodiment of the present invention, the amount of polyalkylene glycol, especially polyethylene glycol - if present - is in the range of from 0.5 to 10% by weight, preferably 1.5 to 7.5 % by weight, more preferably 2 to 5% by weight. The percentages each refer to the amount of polymer (A).

The vast majority of such polyalkylene glycol is polyethylene glycol. Therefore, polyalkylene glycols other than polyethylene glycol are usually neglected in the context of the present invention, and such polyalkylene glycol is also referred to as polyethylene glycol. The contents of polyethylene glycol may be determined by high-performance thin-layer chromatography, for example with Dragendorff's reagent as indicator.

The amount of water may be determined by Karl-Fischer titration.

In one embodiment of the present invention, said polyalkylene glycol, for example polypropylene glycol or especially polyethylene glycol may have an average molecular weight Mₙ in the range of from 200 to 2000 g/mol.

Water may be deliberated added to polymer (A) or stem from the synthesis or purification of polymer (A). Polyalkylene glycol and especially polyethylene glycol may be deliberately added to polymer (A) or result from the synthesis.

In one embodiment of the present invention, polymer (A) provided in step (a) is selected from
(α) polyesters composed of an aliphatic di- or tricarboxylic acid and at least one alkanolamine, further reacted with C₂-C₄-alkylene oxide, Examples of dicarboxylic acids are adipic acid, sebacic acid, glutaric acid and succinic acid, example of tricarboxylic acid is citric acid. Examples of alkanolamines are mono-, di- and triethanolamine.
(β) polyaspartates alkoxylated with C₂-C₄-alkylene oxide. Such alkoxylated polyaspartates may be obtained by converting maleic acid - or maleic anhydride - with an aliphatic triol or a mixture of aliphatic diol and triol, followed by Michael addition of an ethanolamine and subsequent alkoxylation with ethylene oxide or propylene oxide, or by addition of a polyalkoxylated amine. Such polyaspartates may bear unreacted olefinic double bonds but are still considered aliphatic polymers (A) in the context of the present invention.
(γ) esters of alkoxylated alicyclic or aliphatic diamines, further reacted with C₂-C₄-alkylene oxide. Examples of diamines are ethylene diamine and hexylene diamine and 1.methyl-2,4-diamino cyclohexane. Examples of dicarboxylic acids are adipic acid, sebacic acid, glutaric acid and succinic acid, example of tricarboxylic acid is citric acid
(δ) graft copolymers, for example polyalkylene imines reacted with hydroxycarboxylic acids and C₂-C₄-alkylene oxide.

Examples of polymers (A) according to embodiment (β) are disclosed in WO 2022/008416,

In step (b), said polymer (A) from step (a) is introduced into a drying apparatus that contains a particulate organic or inorganic material with a pH value in the range of from 6 to 11, preferably from 6.0 to 7.5, determined in 1% by weight aqueous slurry or solution.

Said particulate organic or inorganic material is preferably in spheroidal form, for example as a powder or granule itself, with an average particle diameter in the range of from 1 µm to 10 mm, preferably 10 µm to 1 mm.

In one embodiment of the present invention polymer (A) from step (a) is introduced into a drying apparatus that contains solid particles of an inorganic compound selected from zeolite, sodium sulfate, sodium bicarbonate, or solid particles of a sodium salt of a mono-, di- or tricarboxylic acid, and solid particles of an organic polymer selected from homo- and copolymers of (meth)acrylic acid and from water-soluble polysaccharides.

Examples of suitable particulate inorganic materials are sodium bicarbonate, sodium sulfate, potassium bicarbonate, potassium sulfate, SiO₂, for example diatomaceous earth, precipitated silica or fumed silica, and alumosilicates such as zeolite.

Examples of sodium salts of dicarboxylic acids are the mono- and disodium salts of adipic acid, tartaric acid and malic acid. Preferred examples of sodium salts of a tricarboxylic acid are the mono-, di and trisodium salts of citric acid and of methylglycine diacetic acid ("MGDA").

Examples of suitable particulate organic materials are water-soluble polysaccharides such as starch, carboxymethylated starch, chitosan, dextran. Further examples are partially neutralized polyacrylic acid, crystalline amino acids such as glycine and alanine, lactic acid or the respective alkali metal salts, especially the respective sodium salts. Water-soluble shall mean in this context that at least 50 g of the respective polyacrylic acid are soluble in one liter of water at 25°C.

Examples of suitable drying apparatuses are cylindric towers, contact dryers like paddle dryer, double cone dryer, plate dryer and vacuum oven or convective dryers like fluid bed dryers, flash dryers, belt dryer or radiative dryers like microwave dryers or infrared dryers. Such drying apparatuses can be operated at atmospheric pressure or as vacuum dryers at reduced pressure.

Polymer (A) in the molten state as provided ion step (a) may be introduced into the drying apparatus by feeding through pipes or nozzles for highly viscous liquid polymers (A). Such introduction may be performed by introducing polymer (A) as provided in step (a) at a temperature in the range of from 15 to 70°C. At higher temperatures, the decomposition of polymer (A) may become significant. At lower temperature, the viscosity is too high.

The weight ratio of polymer (A) to particulate organic or inorganic material may be in the range of from 1 : 100 to 4:1, preferably 1 : 50 to 2 : 3, more preferably 1 : 20 to 1 : 4.

After the introduction, polymer (A) is thoroughly mixed with said particulate organic or inorganic material. Said mixing may be carried out by mechanical mixing, for example with a stirrer, or in a tumble mixer or - on laboratory scale - by shaking. In another embodiment, such mixing is performed by fluidizing with gas, for example air or nitrogen.

In an optional step (c), water - if applicable - is removed by evaporation. Said removal may occur simultaneously with mixing in step (b), especially when step (b) is carried out by fluidization. In other embodiments, water is removed by a heating operation subsequently to step (b).

It is not necessary to remove all water in step (c) but it is preferred to remove water to a state that the resulting granule has a residual moisture content of from 0.1 to 10%, preferably 0.5 to 5.0% by weight. The residual moisture content is preferably determined by Karl Fischer-titration.

In one embodiment of the present invention, said heating is performed at a temperature in the range of from 50 to 450°C, preferred are 60 to 200°C, particularly preferred are 70 to 150°C. The duration of step (c) is preferably in the range of from 10 seconds to 24 hours, preferred are 1 minute to 5 hours, particularly preferred are 5 minutes to 1 hour.

In another embodiment, water is left in the granule or powder from step (b).

The pressure of step (c) is not critical. It is preferred, though, to use reduced pressure when removal of water is desired at lower temperature due to the heat sensitivity of the respective polymer (A).

In step (d), a granule comprising solid polymer (A) and particulate organic or inorganic material is collected. For that purpose, said granule is removed from drying apparatus and cooled to ambient temperature.

It is possible to remove lumps by a sieving step or a cyclone. It is possible as well to adjust the particle size by a grinding or a sieving step.

In one embodiment of the present invention, a step (e) is performed right before or preferably after step (d). Said step (e) includes adding a silica gel, for example a spheroidal precipitation silica gel or a fumed silica, each with an average particle diameter in the range of from 1 to 25 µm, to the powder or granule resulting from step (b) or (c), as the case may be.

Silica gel may have a pH value in the range of from 6 to 8.

In one embodiment of the present invention, the weight ratio of granule or powder from step (d) to silica added in step (e) is in the range of from 1000 : 1 to 10:1, preferably 500 : 1 to 100 : 1.

By the inventive process, granules are available that have a very good shelf life if, e.g., used in enzyme-based composition for laundry care. They are particularly useful for compositions that are partially solid and partially liquid and that are marketed in multi-compartment packs or in multi-chamber pouches.

Another aspect of the present invention is related to granules, hereinafter also referred to as inventive granules. Inventive granules comprise an aliphatic polymer (A) comprising polyalkylene oxide chains, ester groups and, optionally, amino groups or amide groups, wherein said granule has a core comprising an inorganic or organic material with a pH value in the range of from 6 to 11, preferably from 6.0 to 7.0, determined in 1 % by weight aqueous slurry or solution, wherein said granule has an average particle diameter (D50) in the range of from 150 µm to 1.5 mm, and wherein said granule has a residual moisture content in the range of from 0.1 to 10% by weight.

Polymer (A) has been described above in detail. In inventive granule, polymer (A) may be present together with some polyalkylene glycol, for example polyethylene glycol. In one embodiment of the present invention, the amount of polyalkylene glycol, especially polyethylene glycol - if present - is in the range of from 0.5 to 10% by weight, preferably 1.5 to 7.5 % by weight, more preferably 2 to 5% by weight. The percentage refers to the amount of polymer (A).

Examples of suitable inorganic cores are sodium bicarbonate, sodium sulfate, potassium bicarbonate, potassium sulfate, and alumosilicates such as zeolite.

Examples of suitable organic cores are water-soluble polysaccharide such as starch, carboxymethylated starch, chitosan, dextran. Further examples are partially neutralized polyacrylic acid, crystalline amino acids such as glycine and alanine, and citric acid, each as free acids or partially or fully neutralized with alkali such as sodium. Water-soluble shall mean in this context that at least 50 g of the respective polyacrylic acid are soluble in one liter of water at 25°C.

In one embodiment of the present invention, the weight ratio of polymer (A) to organic or inorganic core is in the range of from 5: 1 to 1:15, preferably 1:1 to 1:12.

In one embodiment of the present invention, inventive granule has an outer layer of silica gel, for example a spheroidal precipitation silica gel or a fumed silica, each with an average particle diameter in the range of from 1 to 25 µm. Said outer layer may also be referred to as dusting.

Silica gel may have a pH value in the range of from 6 to 8.

In one embodiment of the present invention, the weight ratio of granule or powder without dusting to the dusting itself is in the range of from 1000 : 1 to 10:1, preferably 500 : 1 to 100 : 1.

Inventive granule may be added to cleaning compositions, especially to laundry detergent compositions. Such compositions are also referred to as inventive compositions.

In one embodiment of the present invention, inventive compositions comprise at least one enzyme (B).

Examples of useful enzymes (B) are hydrolases selected from lipases, amylases, proteases, cellulases, hemicellulases, phospholipases, esterases, pectinases, lactases and peroxidases, and combinations of at least two of the foregoing types.

Such enzyme(s) (B) can be incorporated at levels sufficient to provide an effective amount for cleaning. The preferred amount is in the range from 0.001% to 5 % by weight of active enzyme by weight in the composition according to the invention. Together with enzyme (B), enzyme stabilizing systems may be used such as, but not limited to calcium ions, boric acid, boronic acid, propylene glycol and short chain carboxylic acids. In the context of the present invention, short chain carboxylic acids are selected from monocarboxylic acids with 1 to 3 carbon atoms per molecule and from dicarboxylic acids with 2 to 6 carbon atoms per molecule. Preferred examples are formic acid, acetic acid, propionic acid, oxalic acid, succinic acid, HOOC(CH₂)₃COOH, adipic acid and mixtures from at least two of the foregoing, as well as the respective sodium and potassium salts.

In one embodiment of the present invention, inventive compositions comprise protease and the inventive granules are used in combination with protease to obtain improvement of oily/fatty stain removal and improved shelf life.

In another embodiment of the present invention, inventive compositions do not comprise protease.

In one embodiment of the present invention, inventive compositions comprise
(C) at least one anionic surfactant, hereinafter also being referred to as anionic surfactant (C).

Examples of anionic surfactants (C) are alkali metal and ammonium salts of C₈-C₁₈-alkyl sulfates, of C₈-C₁₈-fatty alcohol polyether sulfates, of sulfuric acid half-esters of ethoxylated C₄-C₁₂-alkylphenols (ethoxylation: 1 to 50 mol of ethylene oxide/mol), C₁₂-C₁₈ sulfo fatty acid alkyl esters, for example of C₁₂-C₁₈ sulfo fatty acid methyl esters, furthermore of C₁₂-C₁₈-alkylsulfonic acids and of C₁₀-C₁₈-alkylarylsulfonic acids. Preference is given to the alkali metal salts of the aforementioned compounds, particularly preferably the sodium salts.

Further examples of anionic surfactants (C) are soaps, for example the sodium or potassium salts of stearic acid, oleic acid, palmitic acid, ether carboxylates, and alkylether phosphates.

In a preferred embodiment of the present invention, anionic surfactant (C) is selected from compounds according to general formula (III)

R¹-O(CH₂CH₂O)ₓ-SO₃M (III)

wherein
- R¹: n-C₁₀-C₁₈-alkyl, especially with an even number of carbon atoms, for example n-decyl, ndodecyl, n-tetradecyl, n-hexadecyl, or n-octadecyl, preferably C₁₀-C₁₄-alkyl, and even more preferably n-C₁₂-alkyl,
- x: being a number in the range of from 1 to 5, preferably 2 to 4 and even more preferably 3.
- M: being selected from alkali metals, preferably potassium and even more preferably sodium.

In anionic surfactant (C), x may be an average number and therefore n is not necessarily a whole number, while in individual molecules according to formula (I), x denotes a whole number.

In one embodiment of the present invention, inventive compositions may contain 0.1 to 60 % by weight of anionic surfactant (C), preferably 5 to 50 % by weight.

Inventive compositions may comprise ingredients other than the aforementioned. Examples are non-ionic surfactants, fragrances, dyestuffs, biocides, preservatives, enzymes, enzyme stabilizers, hydrotropes, builders, viscosity modifiers, polymers, buffers, defoamers, and anticorrosion additives.

In one embodiment of the present invention, inventive compositions additionally comprise at least one enzyme (B).

Examples of useful enzymes (B) are one or more hydrolases selected from lipases, amylases, proteases, cellulases, hemicellulases, phospholipases, esterases, pectinases, lactases and peroxidases, and combinations of at least two of the foregoing types.

Such enzyme(s) (B) can be incorporated at levels sufficient to provide an effective amount for cleaning. The preferred amount is in the range from 0.001% to 5 % of active enzyme (B) by weight in inventive formulation, especially laundry formulation. Together with enzyme (B) enzyme stabilizing systems may be used such as calcium ions, boric acid, boronic acid, propylene glycol and short chain carboxylic acids. In the context of the present invention, short chain carboxylic acids are selected from monocarboxylic acids with 1 to 3 carbon atoms per molecule and from dicarboxylic acids with 2 to 6 carbon atoms per molecule. Preferred examples are formic acid, acetic acid, propionic acid, oxalic acid, succinic acid, HOOC(CH₂)₃COOH, adipic acid and mixtures from at least two of the foregoing, as well as the respective sodium and potassium salts.

In one embodiment of the present invention, inventive compositions comprise lipases and inventive granule is used in combination with lipases to obtain even further improvement of oily/fatty stain removal.

In another embodiment of the present invention, inventive compositions do not comprise lipases.

Preferred inventive compositions may contain one or more non-ionic surfactants.

Preferred non-ionic surfactants are alkoxylated alcohols, di- and multiblock copolymers of ethylene oxide and propylene oxide and reaction products of sorbitan with ethylene oxide or propylene oxide, alkyl polyglycosides (APG), hydroxyalkyl mixed ethers and amine oxides.

Preferred examples of alkoxylated alcohols and alkoxylated fatty alcohols are, for example, compounds of the general formula (III a) 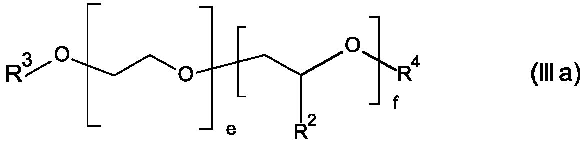 in which the variables are defined as follows:
- R²: is identical or different and selected from hydrogen and linear C₁-C₁₀-alkyl, preferably in each case identical and ethyl and particularly preferably hydrogen or methyl,
- R³: is selected from C₈-C₂₂-alkyl, branched or linear, for example n-C₈H₁₇, n-C₁₀H₂₁, n-C₁₂H₂₅, n-C₁₄H₂₉, n-C₁₆H₃₃ or n-C₁₈H₃₇,
- R⁴: is selected from C₁-C₁₀-alkyl, methyl, ethyl, n-propyl, isopropyl, n-butyl, isobutyl, sec-butyl, tert-butyl, n-pentyl, isopentyl, sec-pentyl, neopentyl, 1,2-dimethylpropyl, isoamyl, n-hexyl, isohexyl, sec-hexyl, n-heptyl, n-octyl, 2-ethylhexyl, n-nonyl, n-decyl or isodecyl,

The variables e and f are in the range from zero to 300, where the sum of e and f is at least one, preferably in the range of from 3 to 50. Preferably, e is in the range from 1 to 100 and f is in the range from 0 to 30.

In one embodiment, compounds of the general formula (III a) may be block copolymers or random copolymers, preference being given to block copolymers.

Other preferred examples of alkoxylated alcohols are, for example, compounds of the general formula (III b) 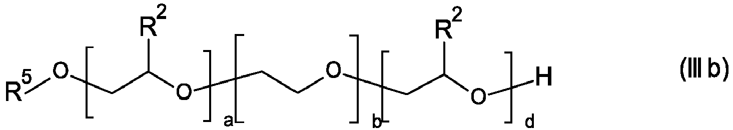 in which the variables are defined as follows:
- R²: is identical or different and selected from hydrogen and linear C₁-C₀-alkyl, preferably iden-tical in each case and ethyl and particularly preferably hydrogen or methyl,
- R⁵: is selected from C₆-C₂₀-alkyl, branched or linear, in particular n-C₈H₁₇, n-C₁₀H₂₁, n-C₁₂H₂₅, n-C₁₃H_{27,} n-C₁₅H₃₁, n-C₁₄H₂₉, n-C₁₆H₃₃, n-C₁₈H₃₇,
- a: is a number in the range from zero to 10, preferably from 1 to 6,
- b: is a number in the range from 1 to 80, preferably from 4 to 20,
- d: is a number in the range from zero to 50, preferably 4 to 25.

The sum a + b + d is preferably in the range of from 5 to 100, even more preferably in the range of from 9 to 50.

Compounds of the general formula (III) may be block copolymers or random copolymers, preference being given to block copolymers.

Further suitable nonionic surfactants are selected from di- and multiblock copolymers, composed of ethylene oxide and propylene oxide. Further suitable nonionic surfactants are selected from ethoxylated or propoxylated sorbitan esters. Amine oxides or alkyl polyglycosides, especially linear C₄-C₁₆-alkyl polyglucosides and branched C₈-C₁₄-alkyl polyglycosides such as compounds of general average formula (IV) are likewise suitable. 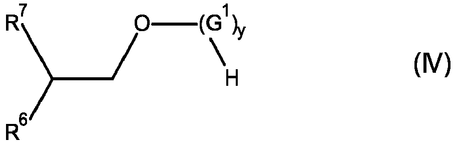 wherein:
- R⁶: is C₁-C₄-alkyl, in particular ethyl, n-propyl or isopropyl,
- R⁷: is -(CH₂)₂-R⁶,
- G¹: is selected from monosaccharides with 4 to 6 carbon atoms, especially from glucose and xylose,
- y: in the range of from 1.1 to 4, y being an average number,

Further examples of non-ionic surfactants are compounds of general formula (V) and (VI) 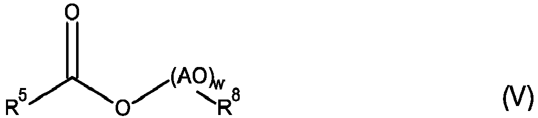 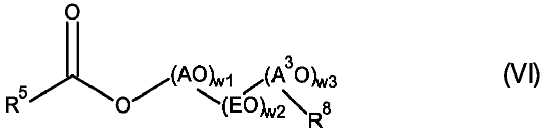
AO is selected from ethylene oxide, propylene oxide and butylene oxide,
EO is ethylene oxide, CH₂CH₂-O,
R⁸ selected from C₈-C₁₈-alkyl, branched or linear, and R⁵ is defined as above.
A³O is selected from propylene oxide and butylene oxide,
w is a number in the range of from 15 to 70, preferably 30 to 50,
w1 and w3 are numbers in the range of from 1 to 5, and
w2 is a number in the range of from 13 to 35.

An overview of suitable further nonionic surfactants can be found in EP-A 0 851 023 and in DE-A 198 19 187.

Mixtures of two or more different nonionic surfactants selected from the foregoing may also be present.

Other surfactants that may be present are selected from amphoteric (zwitterionic) surfactants and anionic surfactants and mixtures thereof.

Examples of amphoteric surfactants are those that bear a positive and a negative charge in the same molecule under use conditions. Preferred examples of amphoteric surfactants are so-called betaine-surfactants. Many examples of betaine-surfactants bear one quaternized nitrogen atom and one carboxylic acid group per molecule. A particularly preferred example of amphoteric surfactants is cocamidopropyl betaine (lauramidopropyl betaine).

Examples of amine oxide surfactants are compounds of the general formula (VII)

R⁹R¹⁰R¹¹N→O (VII)

wherein R⁹, R¹⁰, and R¹¹ are selected independently from each other from aliphatic, cycloaliphatic or C₂-C₄-alkylene C₁₀-C₂₀-alkylamido moieties. Preferably, R⁹ is selected from C₈-C₂₀-alkyl or C₂-C₄-alkylene C₁₀-C₂₀-alkylamido and R¹⁰ and R¹¹ are both methyl.

A particularly preferred example is lauryl dimethyl aminoxide, sometimes also called lauramine oxide. A further particularly preferred example is cocamidylpropyl dimethylaminoxide, sometimes also called cocamidopropylamine oxide.

In one embodiment of the present invention, inventive compositions may contain 0.1 to 60 % by weight of at least one surfactant, selected from non-ionic surfactants, amphoteric surfactants and amine oxide surfactants.

In a preferred embodiment, inventive solid detergent compositions for cleaners and especially those for automatic dishwashing do not contain any anionic surfactant.

Inventive compositions may contain at least one bleaching agent, also referred to as bleach. Bleaching agents may be selected from chlorine bleach and peroxide bleach, and peroxide bleach may be selected from inorganic peroxide bleach and organic peroxide bleach. Preferred are inorganic peroxide bleaches, selected from alkali metal percarbonate, alkali metal perborate and alkali metal persulfate.

Examples of organic peroxide bleaches are organic percarboxylic acids, especially organic percarboxylic acids.

In inventive compositions, alkali metal percarbonates, especially sodium percarbonates, are preferably used in coated form. Such coatings may be of organic or inorganic nature. Examples are glycerol, sodium sulfate, silicate, sodium carbonate, and combinations of at least two of the foregoing, for example combinations of sodium carbonate and sodium sulfate.

Suitable chlorine-containing bleaches are, for example, 1,3-dichloro-5,5-dimethylhydantoin, N-chlorosulfamide, chloramine T, chloramine B, sodium hypochlorite, calcium hypochlorite, magnesium hypochlorite, potassium hypochlorite, potassium dichloroisocyanurate and sodium dichloroisocyanurate.

Inventive compositions may comprise, for example, in the range from 3 to 10% by weight of chlorine-containing bleach.

Inventive compositions may comprise one or more bleach catalysts. Bleach catalysts can be selected from bleach-boosting transition metal salts or transition metal complexes such as, for example, manganese-, iron-, cobalt-, ruthenium- or molybdenum-salen complexes or carbonyl complexes. Manganese, iron, cobalt, ruthenium, molybdenum, titanium, vanadium and copper complexes with nitrogen-containing tripod ligands and also cobalt-, iron-, copper- and ruthenium-amine complexes can also be used as bleach catalysts.

Inventive compositions may comprise one or more bleach activators, for example N-methylmorpholinium-acetonitrile salts ("MMA salts"), trimethylammonium acetonitrile salts, N-acylimides such as, for example, N-nonanoylsuccinimide, 1,5-diacetyl-2,2-dioxohexahydro-1,3,5-triazine ("DADHT") or nitrile quats (trimethylammonium acetonitrile salts).

Further examples of suitable bleach activators are tetraacetylethylenediamine (TAED) and tetraacetylhexylenediamine.

Examples of fragrances are benzyl salicylate, 2-(4-tert.-butylphenyl) 2-methylpropional, commercially available as Lilial^{®}, and hexyl cinnamaldehyde.

Examples of dyestuffs are Acid Blue 9, Acid Yellow 3, Acid Yellow 23, Acid Yellow 73, Pigment Yellow 101, Acid Green 1, Solvent Green 7, and Acid Green 25.

Inventive compositions may contain one or more preservatives or biocides. Biocides and preservatives prevent alterations of inventive liquid detergent compositions due to attacks from microorganisms. Examples of biocides and preservatives are BTA (1,2,3-benzotriazole), benzalkonium chlorides, 1,2-benzisothiazolin-3-one ("BIT"), 2-methyl-2H-isothiazol-3-one ("MIT") and 5-chloro-2-methyl-2H-isothiazol-3-one ("CIT"), 2-butyl-benzo[d]isothiazol-3-one (BBIT), 2-octyl-2H-isothiazol-3-one (OIT);
benzoic acid, sorbic acid and their salts, e.g., sodium benzoate, ammonium benzoate, calcium benzoate, magnesium benzoate, MEA-benzoate, potassium benzoate, calcium sorbate, sodium sorbate, iodopropynyl butylcarbamate ("IPBC"), dichlorodimethylhydantoine ("DCDMH"), bromochlorodimethylhydantoine ("BCDMH"), and dibromodimethylhydantoine ("DBDMH").

Particularly of interest are the following antimicrobial agents and/or preservatives: 4,4'-dichloro 2-hydroxydiphenyl ether, further names: 5-chloro-2-(4-chlorophenoxy) phenol, Diclosan, DCPP that is commercially available as a solution of 30 wt% of 4,4'-dichloro 2-hydroxydiphenyl ether in 1,2 propyleneglycol,
2-Phenoxyethanol, further names: Phenoxyethanol, Methylphenylglycol, Phenoxetol, ethylene glycol phenyl ether, Ethylene glycol monophenyl ether);
2-bromo-2-nitropropane-1,3-diol, further names: 2-bromo-2-nitro-1,3-propanediol, Glutaraldehyde (CAS-No. 111-30-8, further names: 1-5-pentandial, pentane-1,5-dial, glutaral, glutardialdehyde, Glyoxal (further names: ethandial, oxylaldehyde, 1,2-ethandial);
Mixtures of 5-chloro-2-methyl-2H- isothiazol-3-one (CMIT) and 2-methyl-2H-isothiazol-3-one (MIT, EINECS 220-239-6) (mixture of CMIT/MIT); potassium (E,E)-hexa-2,4-dienoate (Potassium Sorbate); lactic acid and its salts; especially sodium lactate, especially L-(+)-lactic acid,

Salicylic acid and its salts, e.g., calcium salicylate, magnesium salicylate, MEA salicylate, sodium salicylate, potassium salicylate, and TEA salicylate.

Benzalkonium chloride, benzalkonium bromide, benzalkonium saccharinate, didecyldimethylammonium chloride (DDAC); N-(3-aminopropyl)-N-dodecylpropane-1,3-diamine (Diamine); peracetic acid, and hydrogen peroxide.

Biocide or preservative may be added to inventive composition in a concentration of 0.001 to 10% relative to the total weight of the composition.

Preferably, inventive composition contains 2-phenoxyethanol in a concentration of 0.1 to 2% or 4,4'-dichloro 2-hydroxydiphenyl ether (DCPP) in a concentration of 0.005 to 0.6%.

The present invention thus further pertains to a method of preserving an inventive aqueous composition against microbial contamination or growth, which method comprises addition of 2-phenoxyethanol.

The present invention thus further pertains to a method of providing an antimicrobial effect on textiles after treatment with solid laundry detergents, e.g., powders, granulates, capsules, tablets, bars etc.), a liquid laundry detergent, a softener or an after rinse containing 4,4'-dichloro 2-hydroxydiphenyl ether (DCPP).

Examples of viscosity modifiers are agar-agar, carragene, tragacanth, gum arabic, alginates, pectins, hydroxyethyl cellulose, hydroxypropyl cellulose, starch, gelatin, locust bean gum, cross-linked poly(meth)acrylates, for example polyacrylic acid cross-linked with bis-(meth)acrylamide, furthermore silicic acid, clay such as - but not limited to - montmorillonite, zeolite, dextrin, and casein.

Hydrotropes in the context with the present invention are compounds that facilitate the dissolution of compounds that exhibit limited solubility in water. Examples of hydrotropes are organic solvents such as ethanol, isopropanol, ethylene glycol, 1,2-propylene glycol, and further organic solvents that are water-miscible under normal conditions without limitation. Further examples of suitable hydrotropes are the sodium salts of toluene sulfonic acid, of xylene sulfonic acid, and of cumene sulfonic acid.

Examples of polymers other than polymer (A) are especially polyacrylic acid and its respective alkali metal salts, especially its sodium salt. A suitable polymer is in particular polyacrylic acid, preferably with an average molecular weight M_{w} in the range from 2,000 to 40,000 g/mol. preferably 2,000 to 10,000 g/mol, in particular 3,000 to 8,000 g/mol, each partially or fully neutralized with alkali, especially with sodium. Suitable as well are copolymeric polycarboxylates, in particular those of acrylic acid with methacrylic acid and of acrylic acid or methacrylic acid with maleic acid and/or fumaric acid. Polyacrylic acid and its respective alkali metal salts may serve as soil anti-redeposition agents.

Further examples of polymers are polyvinylpyrrolidones (PVP). Polyvinylpyrrolidones may serve as dye transfer inhibitors.

Further examples of polymers are polyethylene terephthalates, polyoxyethylene terephthalates, and polyethylene terephthalates that are end-capped with one or two hydrophilic groups per molecule, hydrophilic groups being selected from CH₂CH₂CH₂-SO₃Na, CH₂CH(CH₂-SO₃Na)₂, and CH₂CH(CH₂SO₂Na)CH₂-SO₃Na.

Examples of buffers are monoethanolamine ("MEA") and N,N,N-triethanolamine.

Examples of defoamers are silicones.

Inventive compositions are not only good in cleaning soiled laundry with respect to organic fatty soil such as oil. Inventive liquid detergent compositions are very useful for removing nonbleachable stains such as, but not limited to stains from red wine, tea, coffee, vegetables, and various fruit juices like berry juices from laundry. They still do not leave residues on the clothes.

A further aspect of the present invention is therefore the use of inventive compositions for laundry care. Laundry care in this context includes laundry cleaning.

The present invention is further illustrated by working examples.

### Working examples:

General: OECD tests were carried out in accordance with the OECD Guidelines. According to the OECD guidelines a test is valid if:
1. The reference reaches 60% within 14 days.
2. The difference of the extremes of the test replicates by the end of the test is less than 20%.
3. Oxygen uptake of inoculum blank is 20 to 30 mg O₂/I and must not be greater than 60 mg O₂/I.
4. The pH value measured at the end of the test must be between 6 and 8.5.

Description of the test method used in the context of the present invention:
Biodegradation in sewage was tested in triplicate using the OECD 301F manometric respirometry method. OECD 301F is an aerobic test that measures biodegradation of a sewage sample by measuring the consumption of oxygen. To a measured volume of sewage, 100 mg/L test substance, which is the nominal sole source of carbon, was added along with the inoculum (aerated sludge taken from the municipal sewage treatment plant, Mannheim, Germany). This sludge was stirred in a closed flask at a constant temperature (25°C) for 28 days. The consumption of oxygen is determined by measuring the change in pressure in the closed flask using an Oxi TopC. Carbon dioxide evolved was absorbed in a solution of sodium hydroxide. Nitrification inhibitors were added to the flask to prevent consumption of oxygen due to nitrification. The amount of oxygen taken up by the microbial population during biodegradation of the test substance (corrected for uptake by a blank inoculum run in parallel) is expressed as a percentage of ThOD (theoretical oxygen demand, which is measured by the elemental analysis of the compound). A positive control glucose/glutamic acid is run along with the test samples for each cabinet as reference.

Calculations: Theoretical oxygen demand: Amount of O₂ required to oxidize a compound to its final oxidation products. This amount is calculated using the elemental analysis data.

% Biodegradation

Experimental O₂ uptake x 100 and divided by the theoretical oxygen demand

Abbreviations: EO: ethylene oxide, PO : propylene oxide

Silica gel: a commercially available silica gel, Sipernat^{®} D17, was used. Average particle diameter (d50): 10 µm, hydrophobic

### I. Manufacture of polymers (A)

### 1.1 Manufacture of polymer (A. 1)

In a Dean-Stark apparatus, sebacic acid (0.75 mole) and 1 mole of N,N-N-triethanolamine (triethanolamine) were reacted at 140°C for 17 hours and then another 3 hours at 150°C. Water was cleaved off and collected in the Dean-Stark apparatus. When no more water formation was observed, the ester formation was terminated. The structure of the resultant product mainly corresponded to

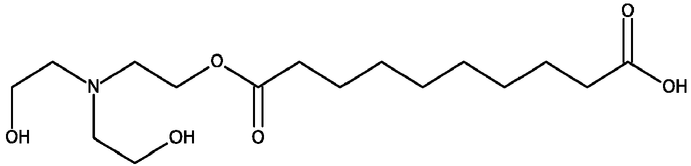

Impurities were the conversion product of two molecules of sebacic acid with one molecule of triethanolamine and the conversion product of one molecule of sebacic acid with two molecules of triethanolamine.

The above ester was then subjected to ethoxylation. A two-liter steel stirred autoclave was charged with 140 g of the above ester and 3.5 g KOH (50% by weight). The autoclave was purged with N₂ three times. The pressure was adjusted to 2 bar with N₂, and the autoclave was heated to 120°C. Within 15 minutes, 50 g of ethylene oxide were added under stirring. As soon as no more exothermic reaction was observed, 673 g of ethylene oxide were added within 11 hours at 120°C. Then, the reaction mixtures was stirred for another 6 hours at 120°C, cooled to 80°C and stirred at 80°C for another 15 hours. Then, the autoclave was cooled to ambient temperature. 863 of a brownish oil were obtained, polymer (A.1). Hydroxyl number: 95 mg KOH/g, Mₙ: 12,400 g/mol, M_{w}: 29,700 g/mol. Water: 0.4% by weight. No polyethylene glycol formation was observed.

### 1.2 Manufacture of polymer (A.2)

### I.2.1: Synthesis of a core:

A 1-liter two-neck round-bottom flask equipped with a mechanical stirrer with PTFE blade was charged with diethyl maleate (385 g, 2.24 mol), 1,6-hexanediol (120.1 g, 1.02 mol), 1,1,1-trimethylolpropane (136.37 g, 1.02 mol) and dibutyltin dilaurate (1.41 g, 2.23 mmol). The flask was attached to a Liebig condenser with a Claisen head, and a slow flow of dry N₂ through the head was applied to keep the reaction under an inert atmosphere. The reaction mixture so obtained was heated to 160 °C for 10 hours with an oil bath. During the first 2 hours, the reaction mixture was kept under N₂ flow, then the pressure in the flask was gradually reduced to 50 mbar using a vacuum pump. After 10 hours, an unsaturated polyester was obtained. Methoxyhydroquinone ("MeHQ", 660 mg) was dissolved in the unsaturated polyester that was used in the second step without further purification.

### I.2.2: Synthesis of polymer (A.2):

A 250 mL round-bottom flask equipped with a magnetic stirrer bar was charged with 200.84 g unsaturated polyester from step I.2.1 corresponding to 0.9 mol of C-C-double bonds. The flask heated to 50 °C under a flow of dry N₂, and H₂N-(EO)₁₉(PO)₃-H (900 g, 0.9 mol) was slowly added. Once the addition was finished, the reaction mixture was stirred at 60 °C for 24 hours. The reaction mixture so obtained was allowed to cool down to ambient temperature. Polymer (A.2) was obtained.

### 1.3 Manufacture of polymer (A.3)

The procedure from WO 2022/008416, polymer (A.1.2) was followed.

### I.4 Manufacture of polymer (A.4)

### I.4.1: Synthesis of Intermediate ITM.1

A 3.5-liter steel autoclave was charged with 1.2 kg (6.88 mol) N4-amine and 120 g water and was then heated to 100 °C. Then, 50 g of ethylene oxide were dosed into the autoclave within 10 minutes. The start of an exothermic reaction was observed. Subsequently, 850 g of ethylene oxide ("EO") were dosed into the autoclave within 14 hours, total amount of EO: 20.45 mol. The system was kept at 100 °C for further 6 hours. After that, the mixture is removed from the autoclave and residual EO and water were stripped under reduced pressure (20 mbar) at 80 °C for two hours. 2.1 kg of intermediate ITM.1 were obtained as a yellow wax.

### I.4.2 Synthesis of cores

### I.4.2.1 Core 1: ITM.1 : citric acid : sebacic acid: 6 : 1 : 9

A 500-ml flask equipped with stirrer, Dean-Stark apparatus, nitrogen inlet and inside thermometer was charged with citric acid (14.61 g, 0.076 mol), sebacic acid (138.39 g, 0.684 mol) and ITM.1 (127.0 g, 0.456 mol). The reaction mixture was stirred at 60 rpm under nitrogen atmosphere and heated to 87 °C over a period of 25 minutes. The stirring speed was adjusted to 210 rpm as viscosity decreased with rising temperature. The reaction mixture was then heated to 120 to 130 °C (inside temperature). Mild foaming was observed. Water was distilled off and collected. Stirring at 120 -130 °C (inside temperature) was continued under nitrogen atmosphere for a total of 9 hours. Then, the reaction mixture was slowly cooled down. The resultant ester ("core 1") was collected as a clear amber viscous material.

### I.4.2.2 Core 2: ITM.1 : citric acid : adipic acid (5 : 1: 4)

A 500-ml flask equipped with stirrer, Dean-Stark apparatus, nitrogen inlet and inside thermometer was charged with citric acid (22.36 g, 0.116 mol), adipic acid (68.08 g, 0.466 mol) and ITM.1 (178.2 g, 0.582 mol). The reaction mixture was stirred at 60 rpm under nitrogen atmosphere and heated to 100 °C over a period of 1 hour. The stirring speed was adjusted to 210 rpm as viscosity decreased with rising temperature. The reaction mixture was then heated to 120 - 130 °C (inside temperature). Foaming was observed. Water was distilled off and collected. Stirring at 120 to 130 °C (inside temperature) was continued under nitrogen atmosphere for a total of 2 hours. Then, the reaction mixture was slowly cooled down. The resultant ester, core (a.3), was collected as an amber, viscous material.

### I.4.3 Alkoxylation

### I.4.3: Alkoxylation of Core 1

A 3.5-I autoclave was charged with 107.0 g core 1 and 4.5 g of an aqueous potassium hydroxide solution (50% wt) and the water was removed by heating the autoclave to 120 °C under reduced pressure and flushing with nitrogen. The autoclave was heated to 130 °C and 50 g ethylene oxide were dosed within 10 minutes. Then, ethylene oxide according to Table 2 was added to the reaction mixture within 17 hours. The resultant reaction mixture was allowed to react for additional 6 hours at 130°C. Then the autoclave was cooled to 80 °C. The reaction mixture was stripped with nitrogen and volatile compounds were removed in vacuo at 80 °C. As a result, an ethoxylated polymer 1 was obtained as dark amber solid.

A 3.5-I autoclave was charged with 444 g ethoxylated polymer 1 and 3.5 g of an aqueous potassium hydroxide solution (50% wt) and the water was removed by heating the autoclave to 120 °C under reduced pressure and flushing with nitrogen. The autoclave was heated to 130 °C and 50 g propylene oxide were dosed within 10 minutes. Then, propylene oxide according to Table 2 was added to the reaction mixture within 20 hours. The resultant reaction mixture was allowed to react for additional 6 hours at 130°C. Then the autoclave was cooled to 80 °C. The reaction mixture was stripped with nitrogen and volatile compounds were removed in vacuo at 80 °C. As a result, polymer (A.4.1) was obtained as dark amber solid.

For the manufacture of polymer (A.4.2), core 2 was reacted accordingly.

**Table 1: summary of experimental data: synthesis of biodegradable polymers (A.4)**

| example | starting material | EO/OH | PO/OH | OH value | amine value | Mₙ | M_{w} |
|---|---|---|---|---|---|---|---|
| (A.4.1) | Core 1 | 20 | 16 | 40.0 | 11.0 | 3310 | 7290 |
| (A.4.2) | Core 2 | 20 | 16 | 36 | 12 | 4200 | 8800 |

### II. Conversion of polymers (A) to an inventive granule

### II.1 Conversion of polymer (A.1)

Step (a.1): 3 g of polymer (A.1) were provided. The residual water content was 3.5% by weight.

Step (b.1): 13 g of a granule of tri-sodium citrate dihydrate, diameter 1 mm, pH value 7.8, were placed in a glass bowl. Under stirring with a spatula, 3 g of polymer (A.1) were slowly added.

After a mixing time of 3 minutes, a slightly sticky powder was obtained.

Step (e.1): To this granule, 0.4 g silica gel were added and mixed carefully, mixing time of 3 minutes.

Step (d.1):The inventive granule (Gr.1) thus obtained was free-flowing and had a polymer content of 8.8% by weight. The average particle diameter (D50) was 1.1 mm, determined by sieving.

### II.2 Conversion of polymer (A.2), (A.3) or (A.4.1) or (A.4.2)

Inventive granules based on polymer (A.2), (A.3) or (A.4.1) or (A.4.2) are made in accordance with the above protocol, *mutatis mutandis.* Inventive granules (Gr.2), (Gr.3), (G.4.1) and (Gr.4.2) are obtained.

### III. Storage tests and results from laundry application experiments

Each polymer (A.1), (A.2), (A.3), (A.4.1), (A.4.2) was stored for 4 months at 40°C as 3% by weight aqueous solutions. Stored solutions (S-A.1), (S-A.2), (S-A.3), (S-A.4.1), and (S-A.4.2) were obtained.

Inventive granules (Gr.1), (Gr.2), (Gr.3), (G.4.1) and (Gr.4.2) were stored at 40°C for 4 months as well.

To determine the primary detergency, the cleaning performance on 4 different particulate stains on a polyester fabric (CFT, Vlaardingen, The Netherlands) was measured by determining the color difference (delta E) between the stains after wash and the unsoiled white fabric using a reflectometer (Datacolor SF600 plus). Each experiment containing the 4 different circular particulate stains (clay ground soil, Standard clay, red pottery clay, tennis court clay; All 4 stains on one polyester fabric, 2 of those fabrics per wash) was repeated 2 times, and the obtained data was used to calculate the average delta E value. By using these delta E values, the so-called "standardized cleaning performance" (delta delta E) has been calculated for each individual stain. The "standardized cleaning performance" (delta delta E) is the difference of the performance of the laundry detergent including the respective inventive granule or comparative polymer, respectively, vs. the laundry detergent w/o any inventive granule or comparative polymer, respectively.

Table 2 shows the composition of the laundry detergent, Table 3 shows the washing test conditions and Table 4 summarizes the obtained standardized cleaning performance. The standardized cleaning performance shown in Table 4 is the sum of the standardized cleaning performance of all 4 stains. The higher the sum of the delta delta E value, the bigger the positive contribution of the respective inventive granule or comparative polymer, respectively, on the cleaning performance.

**Table 2. Composition of the liquid laundry detergent base composition**

| Ingredients | LLD.1 * |
|---|---|
| Linear C₁₂C₁₄-alkylbenzenesulfonic acid | 5.50 |
| C₁₂-fatty alcohol x 2 EO sulfate | 5.40 |
| C₁₂C₁₅-fatty alcohol x 7 EO | 5.40 |
| Coconut C12-C18 fatty acid | 2.40 |
| Sodium hydroxide | 2.20 |
| 1,2-propylene glycol | 6.00 |
| Ethanol | 2.00 |
| Sodium citrate | 3.00 |
| Demin. water | add 100 |
| pH value | 8.5 |

| | |
|---|---|
| *) All data are wt% active ingredient, independent of the respective product form. | |

**Table 3. Washing conditions for evaluation of primary cleaning performance on particulate stains.**

| Washing conditions | |
|---|---|
| Device | Launder-O-Meter from SDL Atlas, Rock Hill, USA |
| Washing liquor | 250 mL |
| Washing time | 30 minutes |
| Washing temperature | 30 °C |
| Detergent concentration | 3.0 g/L |
| Water hardness (Ca:Mg:HCO3) | 2.5 mmol/L (4:1:8) (14 °dH) |
| Fabric to liquor ratio | 1:10 |
| Granule or comparative polymer addition | 3.0% by weight (vs. liquid laundry detergent) of the polymer (as part of the granule or separately), 100% active ingredient |
| Builder addition | 30.0& by weight (vs. liquid laundry detergent) of trisodium citrate dihydrate (as part of the granule or separately) |
| Test fabric * | 4 different circular particulate stains (P-H018, P-H115, P-H144, P-H145) (CFT, Vlaardingen, The Netherlands) on one polyester fabric; 2 stained fabrics per wash |
| Ballast fabric | 2.5 g SBL 2004 (Soil Ballast Fabric 'Formula 2004' that simulates sebum grease stains; WFK Testgewebe GmbH, Brueggen, Germany); + additional white polyester and cotton ballast, to yield a 1:1 ratio of polyester/cotton fabric per experiment |

| | |
|---|---|
| *) After the washing experiment, the test fabrics were rinsed with 14 °dH water (2 times), followed by drying at ambient room temperature overnight, prior to the measurement with the reflectometer. | |

**Table 4. Results from washing tests (primary cleaning performance on particulate stains).**

| Base detergent | Polymer or inventive granule | Concentration polymer (A) from granule * | Concentration polymer (A (separately) * | Concentration builder (from granule or dosed separately) | Standardized cleaning performance (sum delta delta E) ** |
|---|---|---|---|---|---|
| LLD.1 | - | - | - | 30.0 wt% | 0.0 *** |
| LLD.1 | Gr.1 | 3.0 wt% | - | 30.0 wt% | ≥ 7.9 |
| LLD.1 | A.1 | - | 3.0 wt% | 30.0 wt% | ≥ 7.9 |
| LLD.1 | S-A.1 | - | 3.0 wt% | 30.0 wt% | 5.4 |

| | | | | | |
|---|---|---|---|---|---|
| *) All data are wt% active ingredient, independent of the respective product form. **) The 95% confidence interval of the applied method for the sum of delta delta E is +/- 1.5. ***) By definition | | | | | |

Inventive granules based on polymers (A.2), (A.3) or (A.4.1) or (A.4.2), respectively, display similar results.

The results from the washing tests demonstrate that the inventive granule Gr.1 exhibits identical primary cleaning performance (within experimental error) for particular stains compared to the pure polymer alone (A.1). It can be also seen that the stored polymer (S-A.1) shows significantly decreased performance compared to the fresh (i.e., not stored) polymer (A.1), as well as decreased performance vs. the polymer (A.1) stabilized as granule Gr.1.

The effect is even more pronounced in formulations containing a protease or a lipase.

Inventive granules like (Gr.1) may readily be formulated into solid laundry detergents.

## Claims

1. Process for making a granule of an aliphatic polymer (A) comprising polyalkylene oxide chains, ester groups and tertiary amino groups, said process comprising the steps of
(a) providing polymer (A) in the molten state together with at least one of water and polyalkylene glycol,
(b) introducing said polymer (A) into a drying apparatus that contains a particulate organic or inorganic material with a pH value in the range of from 6 to 11, determined in 1% by weight aqueous slurry or solution, and
(c) removing water, if applicable, by evaporation,
(d) collecting a granule comprising solid polymer (A) and particulate organic or inorganic material.

2. Process according to claim 1 wherein the melt has a pH value in the range of from 6 to 11, determined at 23°C and a dilution with water of 1:100.

3. Process according to claim 1 or 2 wherein in step (c), said polymer (A) is introduced into an apparatus that contains solid particles of an inorganic compound selected from zeolite, sodium sulfate, sodium bicarbonate, or solid particles of a sodium salt of a mono-, di- or tricarboxylic acid, and solid particles of an organic polymer selected from homo- and copolymers of (meth)acrylic acid and from water-soluble polysaccharides.

4. Process according to any of the preceding claims wherein in polymer (A) the molar ratio of alkoxide groups and ester groups is in the range of from higher than 10:1.

5. Process according to any of the preceding claims wherein polymer (A) has an OECD 301F biodegradability of at least 40%.

6. Process according to any of the preceding claims wherein polymer (A) has a melting point in the range of from 30 to 60°C, determined by DSC.

7. Process according to any of the preceding claims wherein polymer (A) has a glass transition temperature T_{G} in the range of from -50°C-to +40°C, determined by DSC.

8. Process according to any of the preceding claims wherein polymer (A) provided in step (a) is selected from
(α) polyesters composed of an aliphatic dicarboxylic or tricarboxlic acid and alkanolamine, further reacted with C₂-C₄-alkylene oxide,
(β) polyaspartates alkoxylated with C₂-C₄-alkylene oxide,
(γ) esters of alkoxylated alicyclic or aliphatic diamines, further reacted with C₂-C₄-alkylene oxide,
(δ) polyalkylene imines reacted with hydroxycarboxylic acids and C₂-C₄-alkylene oxide.

9. Granule of an aliphatic polymer (A) comprising polyalkylene oxide chains, ester groups and tertiary amino groups or amide groups, wherein said granule has a core of an organic or inorganic material with a pH value in the range of from 6 to 11, determined in 1% by weight aqueous slurry or solution and from, wherein said granule has an average particle diameter (D50) in the range of from 150 µm to 1.5 mm, and wherein said granule has a residual moisture content in the range of from 0.1 to 10% by weight.

10. Granule according to claim 9 wherein polymer (A) has an OECD 301F biodegradability of at least 40%.

11. Granule according to claim 9 or 10 wherein said inorganic compound is selected from zeolite, sodium sulfate, sodium bicarbonate and from sodium salts of a mono-, di- or tricarboxylic acid, or said organic material is selected from amino acids and polymers, partially neutralized homo- and copolymers of (meth)acrylic acid in polymer (A) or from water-soluble polysaccharides.

12. Granule according to any of the claims 9 to 11 wherein the weight ratio of polymer (A) to organic or inorganic core is in the range of from 10: 1 to 1:10.

13. Granule according to any of the claims 9 to 12 wherein polymer (A) has a glass transition temperature Tc in the range of from -50°C to 40°C, determined by DSC.

14. Granule according to any of the claims 9 to 13 wherein polymer (A) is selected from
(α) polyesters composed of an aliphatic dicarboxylic or tricarboxlic acid and alkanolamine, further reacted with C₂-C₄-alkylene oxide,
(β) polyaspartates alkoxylated with C₂-C₄-alkylene oxide,
(γ) esters of alkoxylated alicyclic or aliphatic diamines, further reacted with C₂-C₄-alkylene oxide
(δ) polyalkylene imines reacted with hydroxycarboxylic acids and C₂-C₄-alkylene oxide,

15. Use of granules according to any of the claims 9 to 14 for the manufacture of laundry detergent compositions or cleaning compositions wherein such laundry detergent composition or cleaning compositions contain at least one enzyme.
